# EUROPÄISCHE PATENTSCHRIFT

(11) **EP 0 515 967 B1**
(45) Veröffentlichungstag und Bekanntmachung des Hinweises auf die Patenterteilung: **02.12.1998**
(21) Anmeldenummer: 92108495.0
(22) Anmeldetag: 20.05.1992
(51) Int. Cl.: H04Q 11/04, H04Q 3/545, H04M 11/06

(54) **Applikationsprogrammschnittstelle**
Application program interface
Interface de programme d'application

(30) Priorität: 29.05.1991 DE 4117510
(43) Veröffentlichungstag der Anmeldung: 02.12.1992
(73) Patentinhaber: ALCATEL ALSTHOM COMPAGNIE GENERALE D'ELECTRICITE, 75008 Paris (FR)
(72) Erfinder: Bergler, Frank, W-7532 Niefern (DE)
(74) Vertreter: Knecht, Ulrich Karl, Dipl.-Ing.

(56) Entgegenhaltungen:
- EP-A- 259 659
- EP-A- 288 713
- PROCEEDINGS OF THE NATIONAL COMMUNICATIONS FORUM Bd. 44, Nr. 8/10, Oktober 1990, OAK BROOK, ILLINOIS US Seiten 724 - 732 N. MC COOK
- NACHRICHTEN ELEKTRONIK UND TELEMATIK Nr. S2, Oktober 1986, HEIDELBERG DE Seiten 3 - 7 T.DREWS
- FUNKSCHAU Nr. 23, 3. November 1989, M NCHEN DE Seiten 24 - 31 'Wann geht die Puste aus?'
- PROC. OF THE INT. CONFERENCE ON ISDN '88 Juni 1988, LONDON, GB Seiten 251 - 262 F.CAUSSARIEU ET AL.

## Beschreibung

Um vielfältige Applikationsprogramme von Personal Computern PC mit einer PC-Karte für ein diensteintegrierendes Netz ISDN verbinden zu können, wird eine Applikationsprogrammschnittstelle, kurz API genannt, benötigt. Eine solche Applikationsprogrammschnittstelle soll es ermöglichen, PC-Applicationsprogramme unabhängig vom Typ und Hersteller der PC-Karte für das ISDN-Netz nutzen zu können ("ISDN-Wann geht die Puste aus", Funkschau, Heft 23, 1989, Seiten 24 bis 31).

Weiter ist aus dem Stand der Technik eine Schnittstelle (ASI) bekannt, die einen Zugriff auf ISDN-Services über sogenannte Network-Adapter (NA) erlaubt. Die Schnittstelle (ASI) wird zwischen der Schicht 3 und der Schicht 4 gemäß des OSI (Open System Interconnection) Schichten Modells positioniert. Demgemäß ist sie ein dimensionsloser Kontaktpunkt zwischen den ISDN-Serviceanbietern, die die Schichten 1 bis 3 benutzen und den Nutzern, die die Schichten 4 und weitere benutzen. Dadurch bietet die Schnittstelle die Möglichkeit, auf ein großes Spektrum von ISDN-Anwendungen zuzugreifen, unabhängig davon, von welchem Hersteller der Network-Adapter angeboten und hergestellt wird (aus: Proceedings of the National Communications Forum; A Common Interface to ISDN Bearer Services; by: Ned McCook; 44 (1990) October 8/10, Chicago, Illinois, US).

Eine bekannte Applikationsprogrammschnittstelle, die sogenannte COMMON-ISDN-API, sorgt dafür, daß PC-Applikationsprogramme (z.B. für Dateitransfer, Terminalemulation) unabhängig von der PC-ISDN-Karte in die ISDN-Umgebung eingebunden werden. Diese Applikationsprogrammschnittstelle ist jedoch noch nicht international für unterschiedliche ISDN-Protokolle für den ISDN-D-Kanal verwendbar ("PC-Kommunikation, Ende des Chaos?", Funkschau, Heft 8, 1989, Seite 26 bis 30).

Die Common-ISDN-API ist speziell auf das ISDN-Protokoll ITR6 der Deutschen Bundespost festgelegt, so daß für Protokolle in anderen Ländern, wie Frankreich oder USA, jeweils die Applikationsprogramme angepaßt werden müssen.

Der Erfindung liegt deshalb die Aufgabe zugrunde, eine Applikationsprogrammschnittstelle zu realisieren, die eine Anpassung unterschiedlicher PC-Applikationsprogramme an ein diensteintegriertes Netz ermöglicht, wobei die Applikationsprogramme unabhängig von den einzelnen Netzprotokollen und deren unterschiedlicher Implementierung von Leistungsmerkmalen erstellbar sind.

Diese Aufgabe wird erfindungsgemäß durch die Lehre des Patentanspruchs 1 gelöst.

Im Gegensatz zu bisherigen Applikationsprogrammschnittstellen, die für alle Dienste, da Netz orientiert, nur einen gemeinsamen Nachrichtensatz enthalten, d.h. lediglich eine für alle Dienste gemeinsame Verbindungsaufbaunachricht, wird durch den erfindungsgemäßen modularen Aufbau der Applikationsprogrammschnittstelle die bisherige Komplexität (je mehr Dienste, desto komplexer) aufgehoben. Es sind somit jederzeit leicht Änderungen möglich, die nicht mehr wie bisher dazu führen, daß sämtliche Applikationsprogramm-Module geändert werden müssen.

Durch das erfingungsgemäße Aufteilen der integrierten Netzdienste in die einzelnen Dienstprogramm-Module für die (Basis) Dienste, wie Paketdaten, Fernsprechen, Fax Gruppe 3/4, Teletex usw., in der Art, daß jedes Dienstprogramm-Modul einen vorgegebene Funktionsabläufe (Prozeduren) darstellenden Nachrichtensatz enthält, kann aufbauend auf der Schicht 3 des OSI-Models (Open System Interconnection) unabhängig von der späteren spezifischen durch (nationale) Protokolle vorgegebenen Implementierung, jedes Applikationsprogramm-Modul erstellt werden. Dabei werden für die einzelnen Dienste in vorteilhafter Weise solche Funktionsabläufe vorgegeben, die bereits für die einzelnen Dienste durch internationale Standards (CCITT, ETSI, ECMA usw.) festgelegt sind.

Selbst falls für einen Dienst noch keine Standardisierung vorliegt, kann zunächst ein selbst erstellter Nachrichtensatz angeboten werden, der nach erfolgter Standardisierung leicht geändert werden kann, da im Gegensatz zu bisher bekannten Lösungen aufgrund der für jeden Dienst unabhängigen Dienstprogramm-Module keinerlei Änderung in den anderen Dienstprogramm-Module der Applikationsprogrammschnittstelle erfolgen muß.

Zum Austauschen der Nachrichtensätze zwischen den Applikationsprogramm-Modulen und der Netzschnittstelle genügt es, wenn die Applikationsprogrammschnittstelle Register enthält, um jeden Startaufruf und jeden Auslöseaufruf zu registrieren, um mittels zugeordneter Nachrichtenwarteschlangen einen Austausch zu ermöglichen.

Weitere vorteilhafte Ausgestaltungen des Gegenstandes der Erfindung sind den Unteransprüchen zu entnehmen.

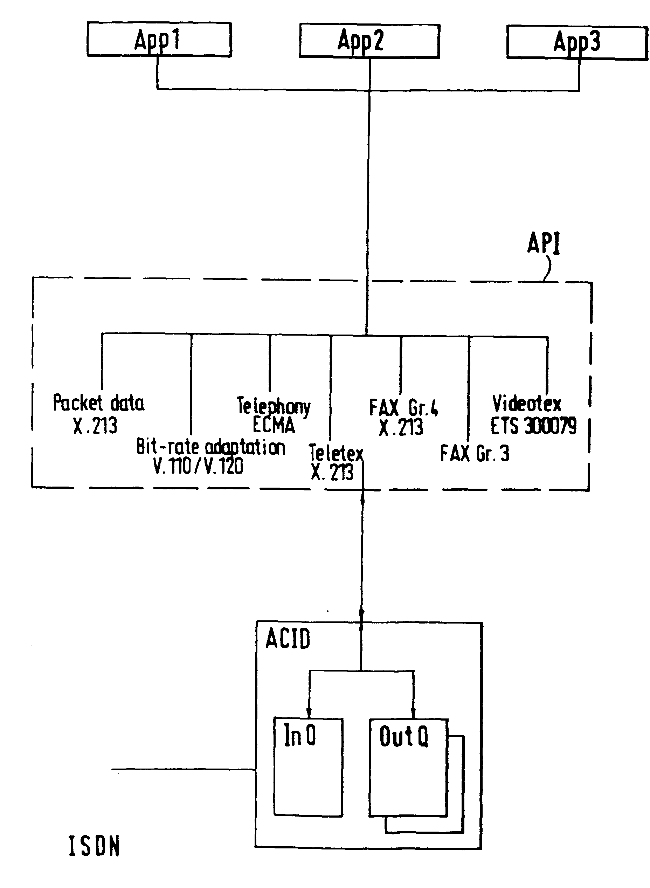

Ein Ausführungsbeispiel wird im folgenden anhand der Zeichnung erläutert.

Die Figur zeigt ein Prinzipschaltbild einer erfindungsgemäßen Applikationsprogrammschnittstelle.

Eine erfindungsgemäße Applikationsprogrammschnittstelle API, wie in der Fig. gezeigt, ist mit einer Vielzahl von unterschiedlichen Applikationsprogramm-Modulen App1, App2, App3, die z.B. auf einem Personal Computer laufen können, verbunden und bildet eine Schnittstelle zu einer Netzschnittstelle ACID eines diensteintegrierenden Netzes ISDN.

Die Applikationsprogrammschnittstelle API, im folgenden kurz API genannt, weist für jeden einzelnen Dienst des Netzes ISDN ein unabhängiges Dienstprogramm-Modul Paketdaten, Fernsprechen, Bitratenadaption, Teletex, Fax Gr 3/4, Videotex auf.

Dabei enthält jedes Dienstprogramm-Modul einen fest vorgegebenen Funktionsabläufe (auf Schicht 3 nach OSI) darstellenden Nachrichtensatz.

In vorteilhafter Weise wird für jeden Dienst, wenn vorhanden, ein bereits international verabschiedeter Standard als Basis verwendet (z.B. nach CCITT, ETSI, ECMA, usw.).

Gemäß dem vorliegenden Ausführungsbeispiel wird für die Dienste Paketdaten, Teletex und Fax Gruppe 3/4 auf die CCITT-Empfehlung X.213 zurückgegriffen. Der Dienst Bitratenadaption wird nach der CCITT-Empfehlung V.110/V.120 und der Dienst Videotex nach der ETSI-Empfehlung ETS 300079 vorgegeben. Für Fernsprechen kann eine Standardisierung nach ECMA genommen werden. Ein Beispiel für den jeweiligen Nachrichtensatz ist dem Anhang zu entnehmen.

Zum Austauschen der Nachrichtensätze zwischen den Applikationsprogramm-Modulen App1, App2, App3 und der Netzschnittstelle ACID enthält die API Register zum Speichern jedes Startaufrufes und jedes Auslöseaufrufes eine Nachrichtensatzes für ein Applikationsprogramm-Modul. Jeder Aufruf enthält dazu ein den benötigten Dienst (z.B. Fernsprechen) kennzeichnende Information, die z.B. im Kopfteil (Header) des Aufrufes stehen kann.

Erfolgt ein Startaufruf (oder Auslöseaufruf), so wird zum Austausch eines Nachrichtensatzes eine einen Kanal bildende Nachrichtenwarteschlange zugeordnet (oder ausgelöst).

Vorteilhafterweise enthält jede Nachrichten-Warteschlange wenigstens eine Eingangswarteschlange InQ und wenigstens eine Ausgangswarteschlange OutQ, die mit der Netzschnittstelle ACID enthalten und den Applikationsprogramm-Moduln App1, App2, App3 verbindbar sind.

Es wird jeweils eine Ausgangswarteschlange OutQ zu jedem registrierten Applikationsprogramm-Modul zugeordnet, so daß mehrere Applikationsprogramm-Module einer Netzschnittstelle ACID zugeordnet werden können. Selbstverständlich können auch mehrere Netzschnittstellen ACID vorhanden sein, die dann entsprechend verbindbar sind. Dabei kann auch ein Applikationsprogramm-Modul durch einfaches Registrieren im API mehreren Netzschnittstellen ACID zugeordnet werden.

Das Leiten der Nachrichten zu den entsprechenden Zielstellen (ACID, App1, App2, App3) erfolgt mittels eines üblichen Abbildungsvorganges (Mapping), vorzugsweise ausgehend von dem PC.

Applikationsprogramm-Module werden mit einem Startaufruf im API registriert. Dabei wird mittels eines definierten Bitfeldes ausgewertet, welche ankommenden Nachrichten zu diesem Applikationsprogramm-Modul geleitet werden sollen. Das Bitfeld kann wie folgt dargestellt werden:
Bit 0 Fernsprechen (3,1 kHz, 7 kHz)
Bit 1 Fax Gruppe 3
Bit 2 Fax Gruppe 4
Bit 3 Teletex
Bit 4 Videotex
Bit 5 Paketdaten
Bit 6 V.110 Bitratenadaption
.
.
. für sonstige Dienste reserviert.

Dadurch können entsprechende Nachrichtenwarteschlangen leicht aufgebaut werden.

Mit Hilfe eines Auslöseaufrufs (Release) kann eine zugeordnete Nachrichtenwarteschlange ausgelöst werden.

Aufgrund des modularen Aufbaus des API kann jegliches diensteintegrierte Netz einfach durch Hinzufügen oder Wegnehmen von Dienstprogramm-Modulen angepaßt werden.

Da sich außerdem die Dienstprogramm-Module auf international standardisierten (wenn möglich) Funktionsabläufen abstützen, die von der eigentlichen Implementierung nach z.B. nationalen Protokollen (1TR6, VN2, usw.) in der jeweils ohnehin vorhandenen (PC)-Netzschnittstelle ACID unabhängig sind, kann jedes Applikationsprogramm-Modul völlig unabhängig, nur an den standardisierten Funktionen orientiert, erstellt werden.

### Anhang

| Fernsprechen: (Voice Call) | |
|---|---|
| VC Dial | Wählen |
| VC Answer | Ankommender Ruf behandeln |
| VC Terminate | Auslösen |
| VC Alerted | Alarmsignal, gerufene Station hat Ruf registriert |
| VC Connected | Verbindung aufgebaut |
| VC Disconnected | Verbindung abgebaut |
| VC Engaged | Verbindung belegt |
| VC Incoming Call | Ankommender Ruf |
| VC Result | Ausführungsergebnis |
| VC Conference | Konferenz |
| VC Drop | Auslösen eines zuletzt einer Konferenz hinzugefügten Teilnehmers |
| VC Transfer | Rufweiterleiten |
| VC Hold | Verbindung Halten |
| VC Reconnect | Gehaltene Verbindung wieder aufbauen |
| VC Booking | Vormerken |
| VC Camp 0u | Rückrufautomatik |
| VC Divert | Rufweiterleitung |
| VC Enquire | Rückfrage |
| VC Broker | Makeln |
| VC Intrusion | Rückführung |
| VC Pickup | Übernehmen |
| VC Direct Speech | Direktruf |

### Paketdaten nach X.213 (CCITT):

PD = Packet data, QOS = Quality of Service
DATA MANAGEMENT
PD SET QOS
PD GET PARENTS
CONNECION PHASE / RELEASE PHASE
   PD CONNECT REQ / DISCONNECT REQ
   PD CONNECT CONF
   PD CONNECT IND / DISCONNECT IND
DATA TRANSFER PHASE
   PD CONNECT RESP
   PD DATA REQ
   PD DATA IND
   PD DATA ACK REQ
   PD DATA ACK IND
   PD EXP DATA REQ
   PD EXP DATA IND
RESET SERVICE
   PD RESET REG
   PD RESET CON
   PD RESET IND
   PD RESET RESP
RESULT MESSAGE
   PD RESULT

### Bitraten nach V.110 (CCITT)

Global Type: V110 Modem
   V110 Dial
   V110 Connected
   V110 Incoming Call
   V110 Answer
   V110 Terminate
   V110 Disconnected
   V110 Send
   V110 Receive
   V110 Parameter
   V110 Result

### Videotex nach ETSI: ETS 300079:

Basic Videotex Messages
   VTX Establish
   VTX Release
   VTX Data
   VTX Reset
   VTX Set Param
   VTX Read Param
   VTX Set Read Param
   VTX TFI
   VTX TC Error
Optional Videotex Messages
   VTX Channel Open
   VTX Channel Close
   VTX Channel Error
   VTX Begin Application
   VTX End Application
   VTX TPD Begin
   VTX TPD End
   VTX DFK
   VTX Escape
Global Definition for Videotex Messages
   VTX ADDR
   VTX Appl
   VTX D UUI
   VTX B CUD
   VTX Cause
   VTX X3 Param

FAX Gruppe 3/4 entsprechend Paketdaten nach X.213.

## Patentansprüche

1. Applikationsprogrammschnittstelle (API) zum Verbinden einer Vielzahl von unterschiedlichen Applikationsprogramm-Modulen (App1, App2, App3) mit einer Netzschnittstelle (ACID) eines diensteintegrierten Netzes (ISDN), **dadurch gekennzeihnet,** daß die Applikationsprogrammschnittstelle (API) für jeden einzelnen Dienst des Netzes ein Dienstprogramm-Modul (Paketdaten, Fernsprechen, Teletex, Fax Gr 3/4) enthält, bei der jedes Dienstprogramm-Modul einen für den einzelnen Dienst vorgegebenen Funktionsabläufe darstellenden Nachrichtensatz enthält zum Zugriff auf die einzelnen Dienste auf unterschiedlichen Schichten, und bei der die Applikationsprogrammschnittstelle Mittel zum Austauschen der Nachrichtensätze zwischen den Applikationsprogramm-Modulen (App1, App2, App3) und der Netzschnittstelle (ACID) enthält.

2. Applikationsprogrammschnittstelle (API) nach Anspruch 1, mit Registern zum Speichern jedes Startaufrufes und jedes Auslöseaufrufes eines Nachrichtensatzes für ein Applikationsprogramm-Modul, wobei jeder Aufruf eine den einzelnen Dienst kennzeichnende Information enthält.

3. Applikationsprogrammschnittstelle (API) nach Anspruch 2, wobei für einen abgespeicherten Startaufruf oder Auslöseaufruf einem Applikationsprogramm-Modul eine einen Kanal bildende Nachrichten-Warteschlange zum Austauschen eines Nachrichtensatzes zugeordnet bzw. ausgelöst wird.

4. Applikationsprogrammschnittstelle (API) nach Anspruch 3, wobei jede Nachrichtenwarteschlange wenigstens eine Eingangswarteschlange (InQ) und wenigstens eine Ausgangswarteschlange (OutQ) enthält, die in der Netzschnittstelle enthalten (ACID) und mit den Applikationsprogramm-Modulen (App1, App2, App3) verbindbar sind.

5. Applikationsprogrammschnittstelle (API) nach Anspruch 1, mit einem ersten Dienstprogramm-Modul (Paketdaten) für Funktionsabläufe für Paketdaten gemäß einer CCITT-Empfehlung X.213.

6. Applikationsprogrammschnittstelle (API) nach Anspruch 1, mit einem zweiten Dienstprogramm-Modul (Bitratenadaption) für Funktionsabläufe für Bitratenadaption gemäß einer CCITT-Empfehlung V.110/V.120.

7. Applikationsprogrammschnittstelle (API) nach Anspruch 1, mit einem dritten Dienstprogramm-Modul (Fernsprechen) für Funktionsabläufe für Fernsprechen gemäß einer ECMA (European Computer Manufactures' Association)-Empfehlung.

8. Applikationsprogrammschnittstelle (API) nach Anspruch 1, mit einem vierten Dienstprogramm-Modul (Teletex) für Funktionsabläufe für Teletex gemäß einer CCITT-Empfehlung X.213.

9. Applikationsprogrammschnittstelle (API) nach Anspruch 1, mit einem fünften Dienstprogramm-Modul (FAX) für Funktionsabläufe für Fax Gruppe 4 gemäß einer CCITT-Empfehlung X.213.

10. Applikationsprogrammschnittstelle (API) nach Anspruch 1, mit einem sechsten Dienstprogramm-Modul (Videotex) für Funktionsabläufe für Videotex gemäß einer ETSI-Empfehlung ETS 300079.

## Claims

1. An application program interface (API) for connecting a plurality of different application program modules (Appl, App2, App3) with a network interface (ACID) of an integrated services digital network (ISDN),
**characterized in**
that the application program interface (API) comprises a service program module (Packet data, Telephony, Teletex, FAX Gr 3/4) for each service of the network, that each service program module contains a message set representing specified procedures for the individual service, and that the application program interface comprises means for exchanging the message sets between the application program modules (Appl, App2, App3) and the network interface (ACID).

2. An application program interface (API) as claimed in claim 1, comprising registers for storing each start call and each release call of a message set for an application program module, each call containing information identifying the respective service.

3. An application program interface (AP1) as claimed in claim 2 wherein for each stored start call or release call, a message queue forming a channel is assigned to an application program module or released, respectively, for the exchange of a message set.

4. An application program interface (API) as claimed in claim 3 wherein each message queue contains at least one input message queue (InQ) and at least one output message queue (OutQ) which are contained in the network interface (ACID) and are connectable with the application program modules (App1, App2, App3).

5. An application program interface (APT) as claimed in claim 1, comprising a first service program module (Packet data) for procedures for packet data according to CCITT Recommendation X.213.

6. An application program interface (API) as claimed in claim 1, comprising a second service program module (Bit-rate adaptation) for procedures for bit-rate adaptation according to CCITT Recommendation V.110/V.120.

7. An application program interface (API) as claimed in claim 1, comprising a third service program module (Telephony) for procedures for telephony according to an ECMA (European Computer Manufacturers' Association) Recommendation.

8. An application program interface (API) as claimed in claim 1, comprising a fourth service program module (Teletex) for procedures for teletex according to CCITT Recommendation X.213.

9. An application program interface (API) as claimed in claim 1, comprising a fifth service program module (FAX) for procedures for fax group 4 according to CCITT Recommendation X.213.

10. An application program interface (API) as claimed in claim 1, comprising a sixth service program module (Videotex) for procedures for videotex according to ETSI Recommendation ETS 300079.

## Revendications

1. Interface de programme d'application (API) pour relier une multitude de modules de programmes d'application différents (App1, App2, App3) à une interface de réseau (ACID) d'un réseau à intégration de services (RNIS), caractérisée en ce que l'interface de programme d'application (API) contient pour chaque service individuel du réseau un module de programme utilitaire (données paquet, télécommunication, télétexte, télécopieurs de groupe 3/4), dans laquelle chaque module de programme utilitaire contient un enregistrement de messages représentant des routines fonctionnelles prédéterminées pour le service individuel pour accéder aux services individuels sur différentes couches, et dans laquelle l'interface de programme d'application contient des moyens pour échanger des enregistrements de messages entre les modules de programme d'application (App1, App2, App3) et l'interface de réseau (ACID).

2. Interface de programme d'application (API) selon la revendication 1, avec des registres pour mémoriser chaque appel initial et chaque appel de déconnexion d'un enregistrement de messages pour un module de programme d'application, dans laquelle chaque appel contient des informations identifiant le service individuel.

3. Interface de programme d'application (API) selon la revendication 2, dans laquelle, pour un appel initial ou un appel de déconnexion mémorisé, une file d'attente de messages fermant un canal est attribuée à, ou déconnectée d'un module de programme d'application pour échanger un enregistrement de messages.

4. Interface de programme d'application (API) selon la revendication 3, dans laquelle chaque file d'attente de messages contient au moins une file d'attente d'entrée (InQ) et au moins une file d'attente de sortie (OutQ) qui font partie de l'interface de réseau (ACID) et peuvent être reliées aux modules de programmes d'application (App1, App2, App3).

5. Interface de programme d'application (API) selon la revendication 1, avec un premier module de programme utilitaire (données paquet) pour des routines fonctionnelles pour des données paquet selon une recommandation CCITT X.213.

6. Interface de programme d'application (API) selon la revendication 1, avec un deuxième module de programme utilitaire (adaptation de vitesse binaire) pour des routines fonctionnelles pour l'adaptation de la vitesse binaire selon une recommandation CCITT V.110/V.120.

7. Interface de programme d'application (API) selon la revendication 1, avec un troisième module de programme utilitaire (télécommunication) pour des routines fonctionnelles pour la télécommunication selon une recommandation ECMA (European Computer Manufacturers' Association).

8. Interface de programme d'application (API) selon la revendication 1, avec un quatrième module de programme utilitaire (télétexte) pour des routines fonctionnelles pour le télétexte selon une recommandation CCITT X.213.

9. Interface de programme d'application (API) selon la revendication 1, avec un cinquième module de programme utilitaire (télécopie) pour des routines fonctionnelles pour des télécopieurs de groupe 4 selon une recommandation CCITT X.213.

10. Interface de programme d'application (APT) selon la revendication 1, avec un sixième module de programme utilitaire (vidéotexte) pour des routines fonctionnelles pour le vidéotexte selon une recommandation ETSI ETS 300079.
